# EUROPEAN PATENT APPLICATION

(11) **EP 2 624 585 A1**
(43) Date of publication of application: **07.08.2013**
(21) Application number: 13152897.8
(22) Date of filing: 28.01.2013
(51) Int. Cl.: H04N 21/485, H04N 21/4722, G06F 3/0481, H04H 60/37, H04N 5/445, H04N 21/443, H04N 21/454

(54) **Display apparatus and additional information providing method using the same**

(30) Priority: 31.01.2012 KR 20120010060
(71) Applicant: Samsung Electronics Co., Ltd, Gyeonggi-do 443-742 (KR)
(72) Inventor: Kim, Dae-hyun, Gyeonggi-do (KR); Yoon, Yeo-ri, Gyeonggi-do (KR); Hyeon, Su-gyeong, Daegu (KR)
(74) Representative: Walaski, Jan Filip

(57) **Abstract**

A display apparatus is disclosed. The display apparatus includes a receiver which receives contents, a display unit which displays the received contents, a controller which displays a user interface (UI) which, if a predetermined event occurs, poses a question regarding whether additional information corresponding to the contents is intended to be received , and, when an additional information reject command is input through the UI, the controller controls to change a display format of the UI when the UI is displayed thereafter.

## Description

The present invention relates to a display apparatus and method of providing additional information, and more particularly, to a display apparatus which displays contents and additional information corresponding thereto, and an additional information providing method using the same.

Due to developments in electronic technologies, while a user watches contents, the user can receive information on the characters starring in the contents or product information on items displayed in the contents, for example.

However, existing display apparatuses, except for Internet protocol (IP) televisions (TVs), receive contents and information related thereto from a contents provider such as a broadcasting station. As a result, problems may arise due to the fact that the services can be provided only in one direction.

That is, when information related to the contents is provided in existing display apparatuses, the user has no choice but to receive the corresponding information from the contents provider, and thus the user is interrupted by the displayed information regardless of whether the user intends to see the information while watching the contents.

Exemplary embodiments provide a display apparatus which may display additional information according to a user's intention and an additional information providing method using the same.

According to an aspect of an exemplary embodiment, there is provided a display apparatus including a receiver which receives contents, a display unit which displays the received contents, a controller which displays a user interface (UI) which poses a question regarding whether additional information corresponding to the contents is intended to be received if a predetermined event occurs, and, when an additional information reject command is input through the UI, controls to change a display format of the UI when the UI is displayed thereafter.

The display apparatus may further include a communication interface which communicates with a server, and which receives additional information corresponding to the contents, and the controller may receive the additional information and displays the additional information on the display unit when a receive command for the additional information is input through the UI.

If the additional information reject command is input a preset number of times through the UI, the controller may control not to display the UI even if the predetermined event occurs.

The controller may reduce a size or increase a transparency of the UI displayed thereafter if the predetermined event occurs and display the UI on the display unit, when the additional information reject command is input a preset number of times through the UI.

The controller may display a channel selecting UI for selecting a channel to receive and display the additional information on the display unit according to a user's command.

The controller may also display a UI which poses a question on the display unit regarding whether the additional information is intended to be received corresponding to the contents provided by a channel selected through the channel selecting UI.

The controller may further display the channel selecting UI on the display unit when the additional information reject command is input a preset number of times through the UI.

The additional information may include at least one of detailed information on the contents and an advertisement related to the contents.

According to an aspect of another exemplary embodiment, there is provided an additional information providing method of a display apparatus displaying contents, the method including receiving the contents; displaying the received contents; displaying a user interface (UI) which poses a question regarding whether additional information corresponding to the contents is intended to be received if a predetermined event occurs; and when an additional information reject command is input through the UI, changing a display format of the UI when the UI is displayed thereafter.

The additional information providing method may further include receiving the additional information from a server and displaying the additional information when a receive command for the additional information is input through the UI.

The changing the display format of the UI and the displaying may include if the additional information reject command is input a preset number of times through the UI, the UI is not displayed even if the predetermined event occurs.

The changing the display format and the displaying of the UI may include reducing a size or increasing a transparency of the UI displayed thereafter if the predetermined event occurs , the UI is displayed on the display unit, and if the additional information reject command is input a preset number of times through the UI.

The additional information providing method may further include displaying a channel selecting UI for selecting a channel to receive and display the additional information, according to a user's command.

The UI may pose a question regarding whether additional information is intended to be received regarding the contents provided by the channel selected through the channel selecting UI.

The displaying the channel selecting UI may also display the channel selecting UI when the additional information reject command is input a preset number of times through the UI.

The additional information may include at least one of detailed information on the contents and an advertisement on the contents.

The above and/or other aspects will be more apparent by describing certain in detail exemplary embodiments, with reference to the accompanying drawings, in which:
FIG. 1 is a view of a configuration of an additional information providing system according to an exemplary embodiment;
FIG. 2 is a block diagram illustrating a configuration of a display apparatus according to an exemplary embodiment;
FIG. 3 is a view of a detailed configuration of a display apparatus according to an exemplary embodiment;
FIG. 4 is a block diagram illustrating a configuration of a server according to an exemplary embodiment;
FIGs. 5A to 5G are views of an example of a UI provided in a display apparatus according to an exemplary embodiment; and
FIG. 6 is a flowchart of an additional information providing method according to an exemplary embodiment.

Certain exemplary embodiments are described in more detail with reference to the accompanying drawings, in which exemplary embodiments are shown.

In the following description, same reference numerals are used for the same elements when they are depicted in different drawings. The matters defined in the description, such as detailed construction and elements, are provided to assist in a comprehensive understanding of exemplary embodiments. However, it is apparent that the exemplary embodiments can be carried out without those specifically defined matters. Also, functions or elements known in the related art are not described in detail since they would obscure the exemplary embodiments with unnecessary detail.

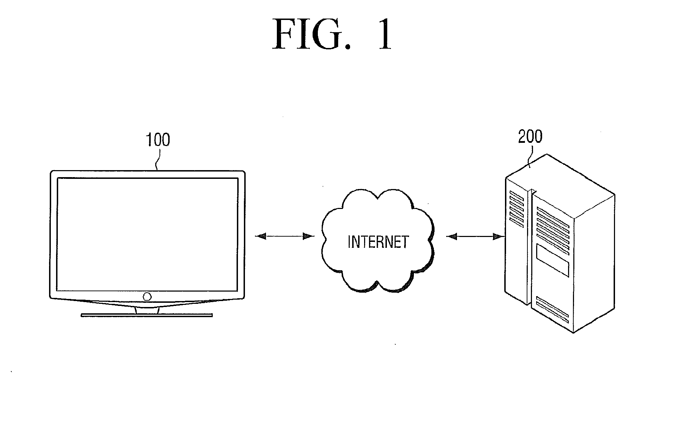

FIG. 1 is a view of a configuration of an additional information providing system according to an exemplary embodiment. As illustrated in FIG. 1, the additional information providing system may include a display apparatus 100 and a server 200, which may be interconnected through a network, such as the Internet, for example.

The display apparatus 100 may receive contents from a contents producer or from a contents provider such as a ground wave broadcasting station or a cable broadcasting station. In addition, the display apparatus 100 may receive the additional information on the contents from the server 200 which may be connected to the display apparatus 100 via the Internet. Herein, additional information includes at least one of detailed information on the contents and advertisements related to the contents.

The display apparatus performing such a function is preferably a DTV. However, the display apparatus is not limited to a DTV. Instead, any apparatus which may receive contents and display the contents, and which may be connected to the server 200 via a network and receive additional information may be a display apparatus 100 according to an exemplary embodiment.

The server 200 may provide additional information to the display apparatus 100 corresponding to the contents displayed on the display apparatus 100. More specifically, the server 200 may provide the additional information to the display apparatus 100, according to a transmission request command received from the display apparatus 100 and requesting the additional information.

The server 200 may download the additional information, or provide the additional information in a streaming format. The server 200 may also receive the additional information from a contents producer or contents provider such as a ground wave broadcasting station and cable broadcasting station, or from a provider of services other than the contents, and be holding the additional information. The server 200 may store the received additional information in a database (not shown). However, in some cases, the server 200 may be embodied as a relay server which receives additional information from a contents producer, contents provider or service provider, and provides the additional information to the display apparatus 100.

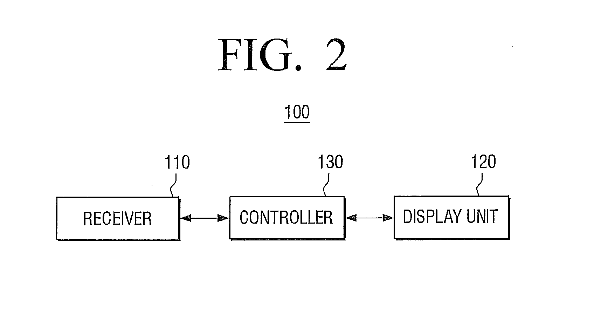

FIG. 2 is a block diagram illustrating a configuration of a display apparatus according to an exemplary embodiment. As shown in FIG. 2, the display apparatus 100 includes a receiver 110, a display unit 120, and a controller 130.

The receiver 110 receives contents. More specifically, the receiver 110 receives contents from a broadcasting station which transmits broadcasting contents via a network or from a web server which transmits contents files using the Internet. In addition, the receiver 110 may receive contents from various types of record medium players provided in the display apparatus 100 or connected to the display apparatus 100. A record medium player refers to an apparatus which plays contents stored in various types of record media such as CD, DVD, hard disk, blue ray disk, memory card, and USB memory, for example.

In an exemplary embodiment when contents are received from a broadcasting station, the receiver 110 may include elements such as a tuner (not illustrated), a demodulator (not illustrated), and an equalizer (not illustrate). On the other hand, in an exemplary embodiment when contents are received from a source such as a web server, the receiver 110 may include an interface unit (not illustrated) which is connected to the record medium player.

As aforementioned, the receiver 110 may be embodied in various ways according to the exemplary embodiments, and may receive broadcasting contents, Internet contents, and VoD (Video On Demand) contents.

The display unit 120 displays the received contents. To this end, the display unit 120 may include a display panel which is embodied as a Liquid Crystal Display (LCD), an Organic Light Emitting Display (OLED) or a Plasma Display Panel (PDP), and a panel driving unit (not illustrated).

In addition, the display unit 120 may display various user interfaces (UIs) which control operations of the display apparatus 100. Especially, the display unit 120 may display a UI which poses a question regarding whether additional information corresponding to the contents is intended to be received, and a UI which receives the additional information and selects a channel to display the additional information.

The controller 130 controls overall operations of the display apparatus 100. Especially, the controller 130 may display the UI which poses the question regarding whether the additional information corresponding to the contents is received if a predetermined event occurs.

The additional information may include at least one of detailed information on the contents and an advertisement related to the contents.

More specifically, the detailed information on the contents may be various information on objects included in the contents. For example, the detailed information may include information about a place where the contents were photographed, and information about characters of the contents.

In addition, the advertisements related to the contents may be various advertisements regarding the objects included in the contents. For example, the advertisements may include advertisements on clothes worn by actors and actresses starring in the contents, product advertisements on accessories worn by the actors and actresses starting in the contents, or food advertisements on the foods appearing in the contents. Internet addresses providing information about the products may also be included,

In addition, the predetermined event may be a point in time where an object which includes the additional information is displayed while the contents are displayed, a point in time when a preset time has passed since the object has been displayed, or another preset time period, but there is no limitation thereto. In this case, the controller 130 may control to display the UI which poses the question regarding whether the additional information is received as a pop-up at the point in time when the predetermined event is occurred.

Information regarding whether additional information is included in the corresponding object may also be included in the contents, For example, information regarding the object which includes the additional information e.g. the name of the object, displaying time is included in is included in the contents. But in some cases, the contents may be analyzed and a result of the analysis may be transmitted to the server (200 in Fig. 1), so that the information on whether an object includes additional information may be received from the server.

As aforementioned, in a case where an object which forms the contents includes additional information, the controller 130 may control to display the UI at various points in time which poses the question whether the additional information corresponding to the contents (or the object) is intended to be received and displayed.

In addition, when an additional information reject command is input through a UI, the controller 130 may control to change a display format of a UI displayed thereafter.

More specifically, when the additional information reject command is input a preset number of times through the UI, the controller 130 may control not to display the UI even if a predetermined event occurs. That is, the controller 130 counts the number of times reject commands are input through the UI, and if the counted number reaches the preset number, the controller 130 may control not to display the UI even if the predetermined event occurs. In some cases, the controller 130 may control the UI to pose a question regarding whether additional information is received but not displayed for a certain period of time.

For example, the UI which poses the question regarding whether the additional information corresponding to the contents is received is displayed at the point in time when the object including additional information is displayed. While one object is displayed, the object including additional information may be displayed numerous times. Accordingly, the UI which poses the question regarding whether the additional information corresponding to the contents is received may be displayed at every point in time when the object including the additional information is displayed. In this case, when the additional information reject command is input the preset number of times, the controller 130 may control the UI to pose the question regarding whether additional information which is received is not displayed even if the object which includes the additional information is displayed.

When the additional information reject command is input a preset number of times through the UI, the controller 130 may reduce a size of the UI or increase a transparency of the UI which is displayed thereafter if the predetermined event occurs and display the UI on the display unit 120.

In the aforementioned example, in a case where the additional information is input the preset number of times through the UI and the object including additional information is displayed again, the controller 130 may reduce the size of the UI or increase the transparency of the UI which poses the question regarding whether additional information is received, and then display the UI on the display unit 120.

In some cases, when the additional information reject command is re-input the preset number of times on the UI of which the size has been reduced or the transparency has been increased, the controller 130 may control the UI to pose the question regarding whether the additional information is received and is not displayed even if the preset event takes place.

The controller 130 may display a channel selecting UI for receiving additional information and selecting a channel to display the additional information. In addition, the controller 130 may display a UI which poses a question regarding whether additional information on the contents provided by the channel selected through the channel selecting UI is received and displayed on the display unit 120. That is, only in regard to the contents provided in the channel selected through the channel selecting UI, the controller 130 may display the UI asking whether the additional information is received by determining whether the object forming the corresponding contents includes additional information.

In addition, when the additional information reject command is input the preset number of times through the UI, the controller 130 may display the channel selecting UI on the display unit 120. That is, when the additional information reject command is input the preset number of times through the UI, the controller 130 may determine that the contents provided in the channel provides unnecessary additional information to the user, and may automatically display the channel selecting UI. Accordingly, the user may be induced to select another channel as a channel from which to receive additional information.

In the aforementioned exemplary embodiment, whether additional information is received is set differently for each channel, but this is merely an exemplary embodiment. Thus, in some cases, it is possible to set whether to receive additional information differently for each program or contents, and to display the UI which poses the question regarding whether additional information is received for each set program or contents.

For example, the controller 130 may display a contents selecting UI for selecting certain contents, and may control the UI to pose a question regarding whether additional information is received only with respect to the contents selected according to a user's command.

The aforementioned explanation includes changing the displaying format of the UI which poses a question regarding whether additional information is received and displaying the UI, if the additional information reject command is input a preset number of times.

The controller 130 may determine whether the reject command is input a preset number of times within one contents or a plurality of contents. More specifically, the controller 130 counts the number of times the reject command is input through the UI while one contents is displayed, but if the number of times the reject command is input does not reach the preset number, the controller 130 may reset the counted number, and restarts counting the number of input reject commands newly input through the UI, and determines whether the number reaches the preset number of times. In addition, on top of the number of times the reject command is input with respect to one contents, the controller 130 may accumulate the number of times the reject command is input through the UI with regard to different contents, and determine whether the preset number of times has been reached. As aforementioned, the controller 130 may determine whether the reject command is input the present number of times with regard to one contents or with regard to a plurality of contents.

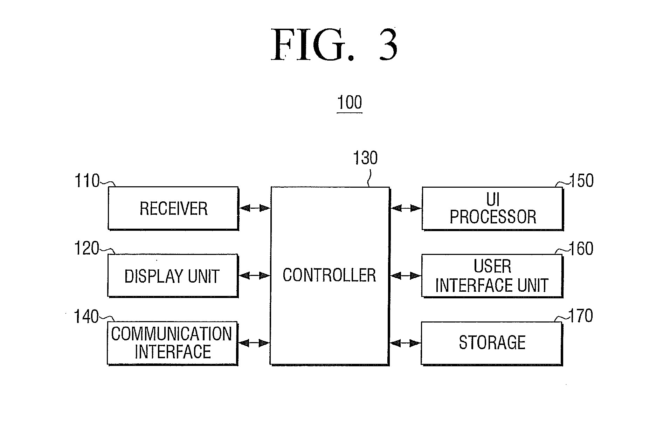

FIG. 3 is a detailed configuration of a display apparatus according to an exemplary embodiment. According to FIG. 3, the display apparatus 100 includes a receiver 110, a display unit 120, a controller 130, a communication interface 140, a UI processor 150, a user interface unit 160, and a storage 170. Since the elements having the same figure reference number perform the same functions as in FIG. 2, repeated explanation on those elements will be omitted.

The receiver 110 may receive the contents from a broadcasting station which transmits broadcasting contents. The receiver may also receive the contents from the web server which transmits contents files using the Internet. In addition, the receiver 110 may receive the contents from various types of record medium players provided in the display apparatus 100 or connected to the display apparatus 100.

The display unit 120 displays the received contents. In addition, the display unit 120 may display the UI which poses a question regarding whether the additional information corresponding to the contents is received, the UI for receiving the additional information and for selecting the channel for displaying the additional information, and the additional information received from the server.

The communication interface 140 may communicate with the server, and may receive the additional information corresponding to the contents. More specifically, the communication interface 140 may be equipped with a network interface card (not illustrated), and may communicate with the server through the Internet or any other network, and may receive the additional information corresponding to the contents. The controller 130 controls the overall operations of the display apparatus 100. Especially, when the transmission request command for additional information is input through the UI, the controller 130 may receive the additional information and display the additional information on the display unit 120. For example, if a request command for additional information is input through the UI, the controller 130 may request the server 200 to transmit additional information regarding an object, and control to display the additional information received from the server 200. In this case, the controller 130 may transmit information regarding the name of the object, the displaying time to the server 200 and request the server 200 to transmit the additional information.

However, this is only an example, and the additional information may be received along with contents, in which case, the controller 130 may display additional information regarding the object when a request command for the additional information is input through the UI.

More specifically, when the transmission request command for additional information is input through the UI posing a question regarding whether the additional information is intended to be received, the controller 130 may control the communication interface 140 to transmit the transmission request command for additional information to the server.

In addition, when the additional information corresponding to the contents is received through the interface unit 140, the controller 130 may display the received additional information on the display unit 120. In this case, the controller 130 may control to stop displaying the contents and to display only the received additional information, or to display the received additional information in an overlapping manner on the contents in an OSD (On Screen Display) format.

The UI processor 150 may create various UIs which are displayed as they overlap the contents displayed on the display unit 120. In particular, the UI processor 150 may create UIs in a 2D or a 3D format.

Especially, the UI processor 150 may create the UI which poses a question regarding whether the additional information corresponding to the contents is received according to the control by the controller 130, and UIs for selecting a channel to receive and display the additional information.

In addition, the UI processor 150 may create main menus and sub menus on the display screen in OSD format, as it manipulates input devices such as a manipulating panel and remote control for selecting the functions that the user selects among the menus.

The user interface unit 160 receives various user commands for controlling the display apparatus 100. Especially, the user interface unit 160 may be embodied to receive the user command through the UI displayed on the display unit 120.

For example, the user interface unit 160 may receive the user command for selecting the reject command or receiving command on the UI which asks whether the additional information is received, and the user command for selecting a certain channel for receiving the additional information on the channel selecting UI.

The user interface unit 160 which performs such functions may be embodied as a key button or key pad, or may be embodied to receive the user command input from a remote control device (not illustrated) such as a remote control. In addition, the user interface unit 160 may be embodied as a touch screen format, including a touch sensor incorporated in the display unit 120.

The storage 170 is a storage medium which stores various programs necessary for operating the display apparatus 100, and which may be embodied as a memory, or HDD (Hard Disk Drive). For example, the storage 170 may store programs performing the operations of the controller 130. The storage 170 may also temporarily store data created by the operating the controller 130, or may store various reference data. Especially, when the additional information reject command is input, the storage 170 may store information on the input number of times according to the control by the controller 130.

Meanwhile, in the above exemplary embodiment, if the additional information reject command is input, the controller 130 stores information on the number of times the reject commands are input in the storage 170, but this is only an example. If the additional information reject command is input, the controller 130 may control the communication interface unit 140 to transmit the information regarding the reject command to the server 200.

In this case, the server 200 may store information on the input of the reject command received from the display apparatus 100 in the display apparatus 100 (for example, in a network address of the display apparatus 100) or in the display apparatus 100 for each user (for example, in a user ID). Subsequently, the server 200 may count the number of times reject commands are input, and if the number reaches a predetermined number, may transmit a request to change the display state of the UI asking whether to receive additional information to the display apparatus 100.

In this case, if the request command to change the display state of the UI is received from the server 200, the controller 130 may change the display state of the UI thereafter. Accordingly, the controller 130 may change and display the UI in various ways, for example, the controller 130 may control not to display the UI, reduce the size of the UI, or increase the transparency of the UI.

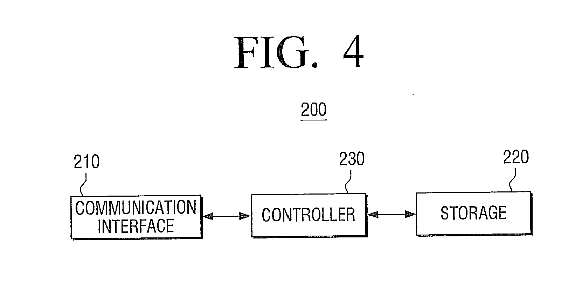

FIG. 4 is a block diagram illustrating a configuration of a server according to an exemplary embodiment. As shown in FIG. 4, the server 200 includes a communication interface 210, a storage 220 and a controller 230.

The communication interface 210 may communicate with the display apparatus (100 in Fig. 1) and may transmit the additional information corresponding to the contents. More specifically, the communication interface 210 is equipped with a network interface card (not illustrated), may communicate with the display apparatus 100 through the Internet, and may transmit the additional information corresponding to the contents to the display apparatus.

The storage 220 stores the additional information. More specifically, the storage 220 may include a database which stores the additional information received from the contents producer or contents provider such as a ground wave broadcasting station and cable broadcasting station, or from a provider of services other than the contents. The storage 220 performing such functions may be embodied as a memory or HDD (Hard Disk Drive).

In addition, the storage 220 may store the number of times the additional information reject commands are input in the display apparatus 100 or in the display apparatus 100 for each user.

The controller 230 controls the overall operations of the server 200. Especially, the controller 230 may control the communication interface 210 to transmit the additional information corresponding to the contents to the display apparatus. More specifically, the controller 230 may read the additional information corresponding to the transmission request command and transmit the additional information to the display apparatus, according to the transmission request command for the additional information received from the display apparatus.

Further, if information regarding the reject command is received from the display apparatus 100, the controller 230 may control the storage 220 to count and store the number of times the reject commands are received. In this case, if the number reaches a predetermined number, the controller 230 may transmit control the communication interface unit 210 to transmit a request to change the display state of the UI asking whether to receive additional information to the display apparatus 100.

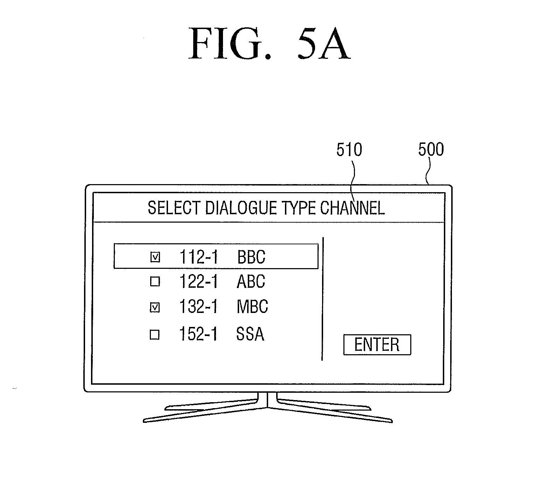

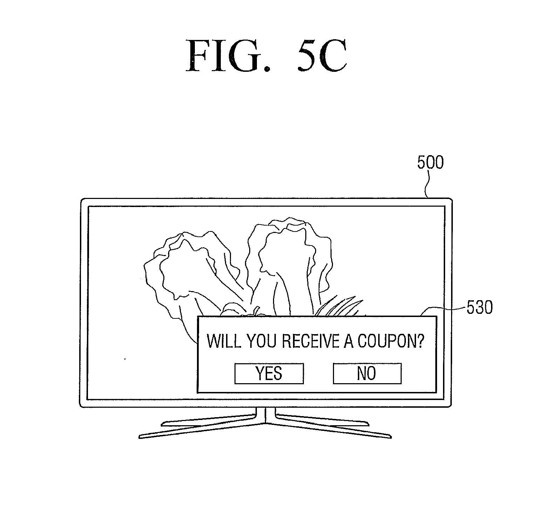

FIGs. 5A to 5G are views of an example of a UI provided in the display apparatus according to an exemplary embodiment.

FIG. 5A is a view illustrating a channel selecting UI according to an exemplary embodiment. The display apparatus 500 may display the UI which determines whether additional information is included only regarding the contents provided through a certain channel and which poses the question regarding whether the additional information is received. To this end, as illustrated in FIG. 5A, the display apparatus 500 displays the UI for selecting the channel 510 (for example, a UI for a dialogue type channel selection), and the user may select a certain channel (for example, "BBC broadcasting of channel 112-1" and "MBC broadcasting of channel 132-1") and may set only the selected channel as the channel where the additional information is displayed.

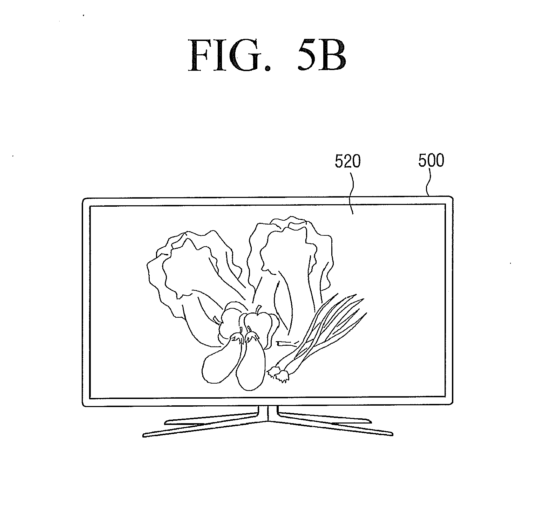

FIGs. 5B to 5E are views of an example for changing a display format of the UI which poses the question regarding whether the additional information is received according to the additional information reject command input, according to an exemplary embodiment.

As illustrated in FIG. 5B, the display apparatus 500 displays the contents 520. In addition, the display apparatus 500 may determine whether additional information is included in an object forming the contents 520. The information regarding whether the corresponding object includes additional information may be included in the contents, or may be received from the server.

In a case where it is determined that the object forming the contents 520 includes additional information, the display apparatus 500 may display the UI which poses the question regarding whether additional information corresponding to the object is received. For example, as illustrated in FIG. 5B, in a case where additional information of a price of a certain product is included in the contents 520, the display apparatus 500 may display the UI 530 which poses the question regarding whether an advertisement of the certain product is intended to be received.

In this case, the display apparatus 500 may display the UI which poses the question regarding whether additional information is received at a point in time when the object which includes the additional information is displayed, at a point in time when a preset time has passed since the object has been displayed, or during a preset time period. As aforementioned, the display apparatus 500 may display the UI which poses the question regarding whether additional information is received for numerous periods every time the predetermined event occurs.

When the additional information reject command is input the preset number of times through the UI which poses the question regarding whether additional information is received, the display apparatus 500 may change the display format of the UI.

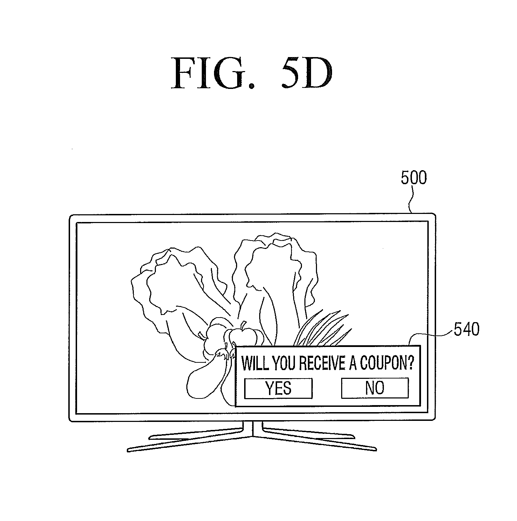

For example, as illustrated in FIG. 5D, the display apparatus 500 may display the UI 540 which poses the question regarding whether an advertisement on a certain product is received to be smaller than the initially displayed UI 530.

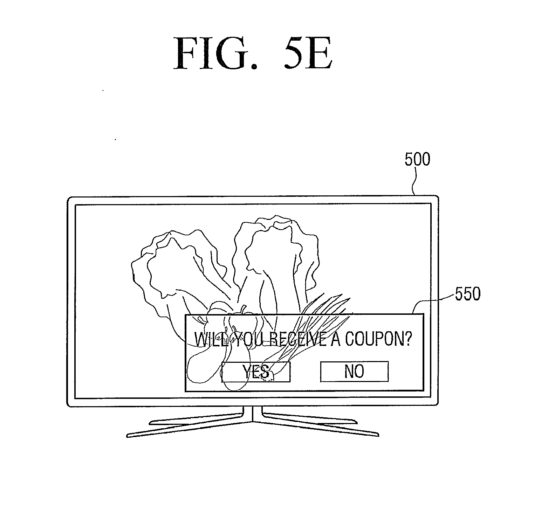

In another example, as illustrated in FIG. 5E, the display apparatus 500 may display the UI 550 which poses the question regarding whether an advertisement on a certain product is received to be more transparent than the initially displayed UI 530.

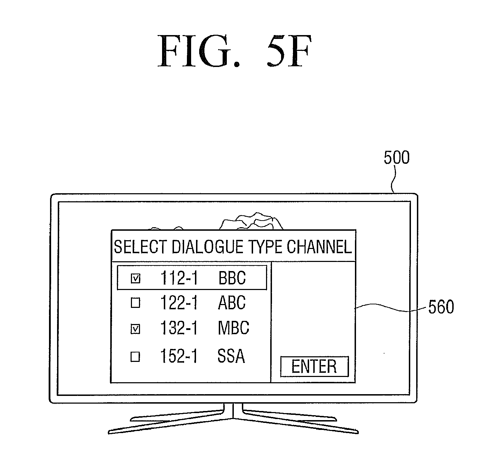

In another example, as illustrated in FIG. 5F, the display apparatus 500 may display the channel selecting UI 560, to induce the user to set the current channel as a channel which does not provide additional information on the contents.

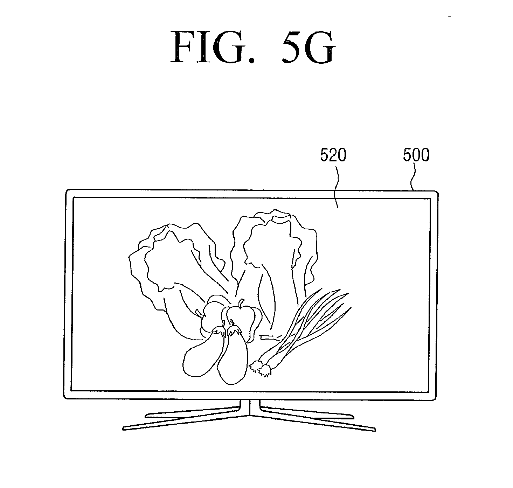

In another example, as illustrated in FIG. 5G, the display apparatus 500 may not display the UI which poses the question regarding whether an advertisement on a certain product is received, and may display only the contents 520, even if the predetermined event occurs. The present event may be the point in time where the object which includes the additional information is displayed while the contents are displayed, a point in time when the preset time has passed since the object has been displayed, or the preset time period.

The display apparatus 500 according to an exemplary embodiment becomes able to change the display format of the UI which poses the question regarding whether additional information is received according to the user's intensions, and thus it is possible to prevent interruption of user's viewing of the contents by the UI provided in push formats.

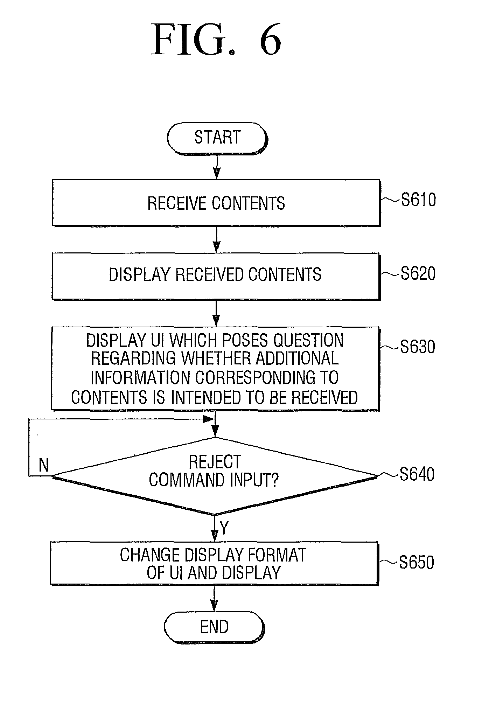

FIG. 6 illustrates a flowchart of an additional information providing method according to an exemplary embodiment. In particular, FIG. 6 is a flowchart of an additional information providing method of a display apparatus which displays contents, wherein the display apparatus may be connected to the server through a network such as the Internet.

Contents are received (S610), for example, from a broadcasting station which transmits broadcasting contents or from a web server which transmits contents files using the Internet. In addition, contents may be received from various record medium players.

Next, the received contents are displayed (S620).

In addition, when to a preset event occurs, a UI which poses a question regarding whether additional information corresponding to the contents is received is displayed (S630). The additional information may include at least one of detailed information on the contents and an advertisement related to the contents. In addition, the preset event may be a point in time when an object which includes the additional information is displayed while the contents are displayed, a point in time when a preset time has passed since the object has been displayed, or a preset time period, but there is no limitation thereto. That is, when it is determined that the object forming the contents includes additional information, the UI which poses the question reagrding whether additional information is received may be displayed at various points.

In addition, when an additional information reject command is input through the UI (S640-Y), a display format of the UI provided thereafter is changed and then displayed (S650).

More specifically, when the additional information reject command is input a preset number of times through the UI, the UI may not be displayed even if the predetermined event occurs. When the additional information reject command is input the preset number of times through the UI, the size of the UI may be reduced or the transparency of the UI may be increased when the UI is displayed thereafter when the predetermined event occurs.

In the exemplary embodiment, it is possible to display a channel selecting UI for selecting a channel for receiving and displaying additional information, according to user's command. In addition, it is possible to display a UI which poses a question regarding whether additional information about the contents provided in the channel selected through the channel selecting UI is received. That is, it is possible to display a UI which poses a question regarding whether additional information is received by determining whether an object forming the corresponding contents includes additional information, regarding only the contents provided in the channel selected through the channel selecting UI.

When the additional information reject command is input the preset number of times through the UI, the channel selecting UI may be displayed. That is, it is possible to determine that the contents provided in the currently selected channel provides unnecessary additional information to the user, and thus the channel selecting UI may be automatically displayed, to induce the user to set another channel as the channel for receiving additional information.

In the aforementioned exemplary embodiment, whether additional information is received is set differently for each channel, but this is merely an example. Thus, in some cases, it is possible to set whether to receive additional information differently for each program or contents, and to display the UI for posing the question regarding whether additional information is received for each set program or contents.

In the exemplary embodiment, when a command to receive additional information is input through the UI, additional information may be received through the server and may be displayed. That is, when the command to receive additional information is received through the UI which poses the question regarding whether additional information is received, it is possible to transmit a transmission request command for additional information about the corresponding contents to the server, and to receive and to display the additional information as a response. In this case, it is possible to stop displaying the contents and to display only the additional information, or to display the additional information to overlap the contents.

A program for performing a method according to the aforementioned various exemplary embodiments may be stored in various types of recording media.

More specifically, a code for performing the aforementioned methods may be stored in various types of recording media such as RAM (Random Access Memory), flash memory, ROM (Read Only Memory), EPROM (Erasable Programmable ROM), EEPROM (Electronically Erasable and Programmable ROM), register, hard disk, removable disk, memory card, USB memory, and CD-ROM which are readable in a terminal.

According to various exemplary embodiments, it is possible to receive additional information from the server and to display the additional information according to the user's intentions. Accordingly, unintended interruption on the user's viewing may be reduced.

The foregoing exemplary embodiments and advantages are merely exemplary and are not to be construed as limiting the present inventive concept. The description of the exemplary embodiments is intended to be illustrative, and not to limit the scope of the claims, and many alternatives, modifications, and variations will be apparent to those skilled in the art.

## Claims

1. A display apparatus comprising:
a receiver which receives contents;
a display unit which displays the received contents; and
a controller which controls the display unit to display a user interface which poses a question regarding whether additional information corresponding to the contents is intended to be received if a predetermined event occurs, and when an additional information reject command is input through the user interface, controls the display unit to change a display format of the user interface when the user interface is displayed thereafter.

2. The display apparatus according to claim 1, further comprising a communication interface which communicates with a server, and which receives the additional information corresponding to the contents, wherein the controller receives the additional information and controls the display unit to display the additional information when a receive command for the additional information is input through the user interface.

3. The display apparatus according to claim 1 or 2, wherein, if the additional information reject command is input a preset number of times through the user interface, the controller controls the display unit to not display the user interface even if the predetermined event occurs.

4. The display apparatus according to claim 1 or 2, wherein, if the additional information reject command is input a preset number of times through the user interface, the controller reduces a size or increases a transparency of the user interface if the predetermined event occurs and the user interface is displayed on the display unit.

5. The display apparatus according to any one of the preceding claims, wherein the controller controls the display unit to display a channel selecting user interface to select a channel according to a user's command to receive the additional information to be displayed on the display unit.

6. The display apparatus according to claim 5, wherein the controller controls the display unit to display the user interface which poses a question regarding whether the additional information corresponding to the contents provided by the channel selected through the channel selecting user interface is intended to be received.

7. The display apparatus according to any one of the preceding claims, wherein the controller controls the display unit to display the channel selecting user interface when the additional information reject command is input a preset number of times through the user interface.

8. The display apparatus according to any one of the preceding claims, wherein the additional information includes at least one of detailed information on the contents and an advertisement related to the contents.

9. An additional information providing method of a display apparatus displaying contents, the method comprising:
receiving the contents;
displaying the received contents;
displaying a user interface which poses a question regarding whether additional information corresponding to the contents is intended to be received if a predetermined event occurs; and
when an additional information reject command is input through the user interface, changing a display format of the user interface when the user interface is displayed thereafter.

10. The additional information providing method according to claim 9, further comprising receiving the additional information from a server and displaying the additional information when a receive command for the additional information is input through the user interface.

11. The additional information providing method according to claim 9 or 10, wherein the changing a display format of the user interface and displaying the user interface comprises if the additional information reject command is input a preset number of times through the user interface, the user interface is not displayed even if the predetermined event occurs.

12. The additional information providing method according to claim 9 or 10, wherein the changing a display format of the user interface and displaying the user interface comprises reducing a size or increasing a transparency of the user interface displayed thereafter if the predetermined event occurs, the user interface is displayed on the display unit, and if the additional information reject command is input a preset number of times through the user interface.

13. The additional information providing method according to any one of claims 9 to 12, further comprising displaying a channel selecting user interface selecting a channel according to a user's command to receive the additional information to be displayed.

14. The additional information providing method according to claim 13, wherein the displaying the user interface which poses a question regarding whether additional information corresponding to the contents provided by the channel selected through the channel selecting user interface is intended to be received.

15. The additional information providing method according to any one of claims 9 to 14, wherein the displaying the channel selecting user interface displays the channel selecting user interface when the additional information reject command is input a preset number of times through the user interface.
